# EUROPEAN PATENT SPECIFICATION

(11) **EP 3 629 846 B1**
(45) Date of publication and mention of the grant of the patent: **01.09.2021**
(21) Application number: 18726192.0
(22) Date of filing: 30.05.2018
(51) Int. Cl.: A47G 19/03, D21H 25/06, D21H 27/00, D21H 19/24, D21H 19/82, B65D 65/46

(54) **METHOD FOR MANUFACTURING A COMPOSTABLE PLATE**
VERFAHREN ZUR HERSTELLUNG EINES KOMPOSTIERBAREN TELLERS
PROCÉDÉ DE FABRICATION D'UNE PLAQUE COMPOSTABLE

(30) Priority: 31.05.2017 IT 201700059261
(43) Date of publication of application: 08.04.2020
(73) Proprietor: Clarichetti, Gianluca, 00060 Canale Monterano (IT)
(72) Inventor: Clarichetti, Gianluca, 00060 Canale Monterano (IT)
(74) Representative: Modiano, Micaela Nadia
(86) International application number: PCT/EP2018/064284
(87) International publication number: WO 2018/220070

(56) References cited:
- EP-A1- 1 321 289
- DE-A1-102015 116 119
- US-A1- 2006 051 603
- US-A1- 2010 252 617
- US-A1- 2011 123 809

## Description

The present invention relates to a method for manufacturing a compostable plate.

US 2011/123809 A1 and US 2006/051603 A1 disclose methods for manufacturing a compostable plate.

Nowadays disposable compostable plates are known, which are made of cellulose pulp obtained for the most part from sugar cane.

The main limitation of the above mentioned disposable compostable plates consists in the impossibility of carrying out printed designs, for example for personalization.

It is furthermore important to emphasize that sometimes the term 'compostable' is considered a synonym of the term 'biodegradable'.

On the contrary, there is a substantial difference between the terms 'compostable' and 'biodegradable'.

A biodegradable element is not in fact automatically also compostable.

A material is defined as biodegradable if it can be broken down, by bacteria, sunlight and other natural physical agents, into simple chemical compounds like water, carbon dioxide and methane. This process applies to a great many materials, but each element has its own degradation time, which may be long. European regulations draw clear lines, however. In order to be considered biodegradable, a product must be broken down by 90% within 6 months.

In order to be considered compostable (convertible to compost, a natural fertilizer) the material not only must be biodegradable but also must be decomposable, and the decomposition process must occur in less than 3 months.

The aim of the present invention is to make available a method for manufacturing a compostable plate which is capable of improving the known art in one or more of the above mentioned aspects.

Within this aim, an object of the invention is to make available a compostable plate that can easily be printed.

Another object of the invention is to make it possible to personalize compostable plates.

Another object of the invention is to provide a compostable plate and a method for manufacturing a compostable plate that are highly reliable, easy to implement and low cost.

This aim and these and other objects which will become better apparent hereinafter are achieved by a method for manufacturing a compostable plate according to claim 1, optionally provided with one or more of the characteristics of the dependent claims.

Further characteristics and advantages of the invention will become better apparent from the description of some preferred, but not exclusive, embodiments of the compostable plate and of the method for manufacturing a compostable plate according to the invention, which are illustrated for the purposes of non-limiting example in the accompanying drawings wherein:

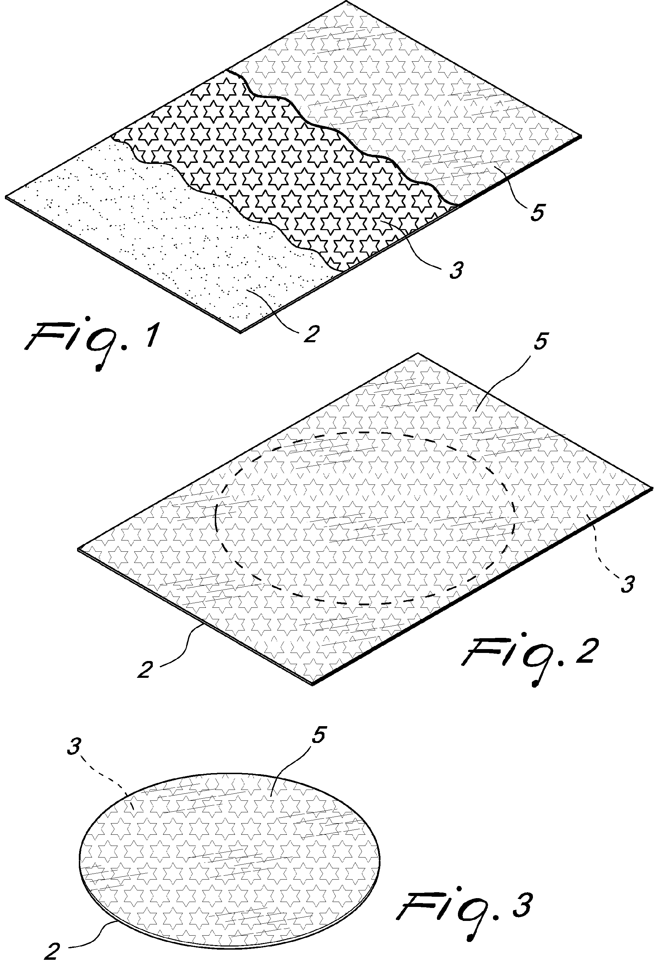

Figure 1 is a cutaway perspective view of a supporting layer associated with a printed design and covered by a protective layer;
Figure 2 is a view similar to Figure 1;
Figure 3 is a perspective view of the cardboard of the supporting layer associated with a printed design and covered by a protective layer after cutting or die-punching;

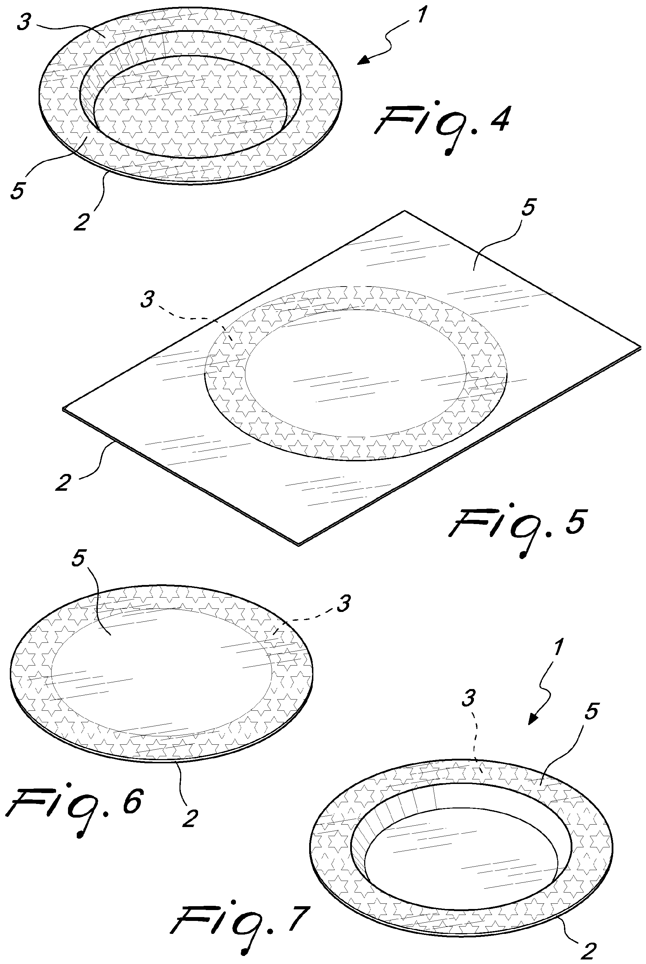

Figure 4 is a perspective view of a plate;
Figures 5 to 7 are views that are similar, respectively, to those in Figures 2 to 4, of a variation of embodiment of the printed design.

With reference to the figures, the compostable plate, generally designated by the reference numeral 1, comprises a supporting layer 2 made of compostable cardboard which has at least one printed portion 3 which is printed with compostable ink.

The plate further has at least one protective layer 5, which is arranged at least above the surface that defines each printed portion 3.

In particular, the protective layer 5 comprises a compostable biopolymer.

The protective layer 5 is arranged at the surface that is intended to provide the concave part of the compostable plate 1.

Advantageously, the compostable biopolymer comprises a film with a thickness comprised between 12 µm and 30 µm, and preferably between 19 µm and 23.8 µm.

Such film can be obtained by way of extrusion (not according to the invention), or spreading of the biopolymer on the supporting layer 2, at the surface that defines the printed portion 3 or the printed portions 3.

Conveniently, the compostable biopolymer has a melting temperature of more than 135°C.

The product commercially designated with the wording MATER-BI CX01A made by Novamont SpA, Italy has been found to be particularly adapted to the purpose.

Conveniently, the supporting layer 2 made of compostable paper comprises substantially cellulose paste.

With regard to the compostable inks, an ink commercially designated with the wording Hidromat-B 463 made by La Sorgente S.P.A., Italy has been found to be particularly adapted to the purpose.

According to a further aspect, the present invention relates to a method for manufacturing a compostable plate 1.

The method comprises:
- a step of manufacturing a supporting layer 2 made of compostable cardboard;
- a step of printing at least one portion to be printed of the supporting layer 2 made of compostable cardboard in order to obtain at least one respective printed portion 3, the step of printing being carried out using compostable inks;
- a step of spreading, at least at the surface that defines the printed portion or portions 3, a compostable biopolymer in order to provide a protective layer 5;
- a step of forming in order to provide a compostable plate.

To provide the protective layer, it has been found to be particularly adapted to use the product commercially designated with the wording MATER-BI CX01A made by Novamont SpA, Italy.

Preferably, the compostable biopolymer used to provide the protective layer 5 is mixed, prior to the step of spreading, with a master batch of granules.

In particular, such master batch is adapted to fluidify the biopolymer and therefore to facilitate the step of spreading.

It has been found to be particularly efficacious to use a compostable ink that is free from amines.

In this regard, it has been found to be particularly suitable to use a product commercially designated with the wording Hidromat-B 463 made by La Sorgente S.P.A., Italy.

The step of forming comprises a thermoforming.

Specifically, the thermoforming is carried out by insertion, between a male mold part and a female mold part, of the supporting layer 2 which has the printed portion or portions 3 and the protective layer 5.

The thermoforming is performed at a temperature comprised between 60°C and 75°C as regards the male mold part and between 120°C and 130°C as regards the female mold part.

The male mold part has a coupling surface which is designed to press against the protective layer 5.

The coupling surface of the male mold part has a plastic coating that is adapted to limit the temperature of the coupling surface.

Preferably, such plastic coating comprises a layer of Teflon.

In practice it has been found that the invention fully achieves the intended aim and objects by providing a method for manufacturing compostable plates that is extremely reliable and capable of ensuring a high ratio of quality to production cost.

The present invention makes it possible to provide a completely compostable plate provided by way of a thermoforming process.

By virtue of identifying the compostable biopolymer intended to provide the protective layer 5, a solution has been obtained that makes it possible, notwithstanding the pressures and temperatures of thermoforming, to obtain a plate that is completely compostable and printed.

Furthermore, with the same performance, a product has been obtained that is lighter and less voluminous, as well as printed, decorated or personalized.

The possibility for personalization is very important for large companies which thus can highlight their respect for the environment by using compostable products with their brand and therefore preferring them to plates made from recycled cardboard.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for manufacturing a compostable plate (1) which comprises:
- a step of manufacturing a supporting layer (2) made of compostable cardboard;
- a step of printing at least one portion to be printed of said supporting layer (2) made of compostable cardboard in order to obtain at least one respective printed portion (3), said step of printing being carried out using compostable inks;
- a step of spreading, at least over the surface that defines said at least one printed portion, a compostable biopolymer in order to provide a protective layer (5);
- a step of forming in order to provide a compostable plate (1), said step of forming comprising a thermoforming by insertion, between a male mold part and a female mold part, of said supporting layer (2) which has the printed portion or portions (3) and the protective layer (5).

2. The method according to claim 1, **characterized in that** said thermoforming is performed at a temperature comprised between 60°C and 75°C as regards the male mold part and between 120°C and 130°C as regards the female mold part.

3. The method according to one or more of the preceding claims, **characterized in that** said male mold part has a coupling surface which is designed to press against the protective layer (5), said coupling surface of the male mold part having a plastic coating that is adapted to limit the temperature of said coupling surface.

4. The method according to one or more of the preceding claims, **characterized in that** said plastic coating comprises a layer of Teflon.

5. The method according to one or more of the preceding claims, **characterized in that** said compostable biopolymer used to provide said protective layer (5) is mixed, prior to the step of spreading, with a master batch of granules which is adapted to fluidify the biopolymer and to facilitate the step of spreading.

6. The method according to one or more of the preceding claims, **characterized in that** said step of printing is carried out using a compostable ink that is free from amines.

## Patentansprüche

1. Ein Verfahren zur Herstellung eines kompostierbaren Tellers (1), das Folgendes umfasst:
- einen Schritt der Herstellung einer Trägerschicht (2) aus kompostierbarer Pappe;
- einen Schritt des Bedruckens mindestens eines zu bedruckenden Teils der Trägerschicht (2) aus kompostierbarer Pappe, um mindestens einen entsprechenden bedruckten Teil (3) zu erhalten, wobei der Schritt des Bedruckens unter Verwendung kompostierbarer Tinten durchgeführt wird;
- einen Schritt des Streichens eines kompostierbaren Biopolymers mindestens über die Oberfläche, die den mindestens einen bedruckten Teil bestimmt, um eine Schutzschicht (5) zu bilden;
- einen Schritt des Formens, um eine kompostierbare Platte (1) zu bilden, wobei der Schritt des Formens ein Thermoformen durch Einfügen der Trägerschicht (2), die den bedruckten Teil oder die bedruckten Teile (3) hat, und der Schutzschicht (5) zwischen einen Patrizenteil und einen Matrizenteil umfasst.

2. Das Verfahren gemäß Anspruch 1, **dadurch gekennzeichnet, dass** das Thermoformen bei einer Temperatur zwischen 60°C und 75°C, den Patrizenteil betreffend, und zwischen 120°C und 130°C, den Matrizenteil betreffend, durchgeführt wird.

3. Das Verfahren gemäß einem oder mehreren der obigen Ansprüche, **dadurch gekennzeichnet, dass** der Patrizenteil eine Verbindungsoberfläche hat, die dazu dient, gegen die Schutzschicht (5) zu drücken, wobei die Verbindungsoberfläche des Patrizenteils eine Kunststoffbeschichtung hat, die ausgebildet ist, um die Temperatur der Verbindungsoberfläche zu begrenzen.

4. Das Verfahren gemäß einem oder mehreren der obigen Ansprüche, **dadurch gekennzeichnet, dass** die Kunststoffbeschichtung eine Schicht Teflon umfasst.

5. Das Verfahren gemäß einem oder mehreren der obigen Ansprüche, **dadurch gekennzeichnet, dass** das kompostierbare Biopolymer, das verwendet wird, um die Schutzschicht (5) zu bilden, vor dem Schritt des Streichens mit einem Masterbatch aus Körnchen gemischt wird, der ausgebildet ist, um das Biopolymer zu verflüssigen und den Schritt des Streichens zu vereinfachen.

6. Das Verfahren gemäß einem oder mehreren der obigen Ansprüche, **dadurch gekennzeichnet, dass** der Schritt des Druckens unter Verwendung einer kompostierbaren Tinte durchgeführt wird, die frei von Aminen ist.

## Revendications

1. Procédé pour fabriquer une plaque compostable (1) qui comporte :
- une étape de fabrication d'une couche de support (2) constituée de carton compostable,
- une étape d'impression d'au moins une portion à imprimer de ladite couche de support (2) constituée de carton compostable afin d'obtenir au moins une portion imprimée (3) respective, ladite étape d'impression étant mise en œuvre en utilisant des encres compostables,
- une étape d'étalement, au moins sur la surface qui définit ladite au moins une portion imprimée, d'un biopolymère compostable afin de fournir une couche protectrice (5),
- une étape de formage afin de fournir une plaque compostable (1), ladite étape de formation comportant un thermoformage par insertion, entre une partie de moule mâle et une partie de moule femelle, de ladite couche de support (2) qui a la portion ou les portions imprimées (3) et la couche protectrice (5).

2. Procédé selon la revendication 1, **caractérisé en ce que** ledit thermoformage est réalisé à une température comprise entre 60 °C et 75 °C en ce qui concerne la partie de moule mâle et entre 120 °C et 130 °C en ce qui concerne la partie de moule femelle.

3. Procédé selon une ou plusieurs des revendications précédentes, **caractérisé en ce que** ladite partie de moule mâle a une surface de couplage qui est conçue pour presser contre la couche protectrice (5), ladite surface de couplage de la partie de moule mâle ayant un revêtement plastique qui est adapté pour limiter la température de ladite surface de couplage.

4. Procédé selon une ou plusieurs des revendications précédentes, **caractérisé en ce que** ledit revêtement plastique comporte une couche de Téflon.

5. Procédé selon une ou plusieurs des revendications précédentes, **caractérisé en ce que** ledit biopolymère compostable utilisé pour fournir ladite couche protectrice (5) est mélangé, avant l'étape d'étalement, à un mélange maître de granules qui est adapté pour fluidifier le biopolymère et pour faciliter l'étape d'étalement.

6. Procédé selon une ou plusieurs des revendications précédentes, **caractérisé en ce que** ladite étape d'impression est mise en œuvre en utilisant une encre compostable qui est exempte d'amines.
